# EUROPÄISCHE PATENTSCHRIFT

(11) **EP 0 685 544 B1**
(45) Veröffentlichungstag und Bekanntmachung des Hinweises auf die Patenterteilung: **18.08.1999**
(21) Anmeldenummer: 95107788.2
(22) Anmeldetag: 22.05.1995
(51) Int. Cl.: C09D 175/04, C08G 18/08

(54) **Wässrige 2-Komponenten-Polyurethanlack-Emulsionen und Verfahren zu deren Herstellung**
Aqueous two-component polyurethane lacquer emulsions and process for their preparation
Emulsions aqueuses de vernis de polyuréthane à deux composants et procédé de leur préparation

(30) Priorität: 03.06.1994 DE 4419570; 23.03.1995 DE 19510651
(43) Veröffentlichungstag der Anmeldung: 06.12.1995
(73) Patentinhaber: BAYER AG, 51368 Leverkusen (DE)
(72) Erfinder: Kahl, Lothar, Dr., D-51465 Bergisch Gladbach (DE); Klinksiek, Bernd, D-51429 Bergisch Gladbach (DE); Schleenstein, Dieter, D-51519 Odenthal (DE); Bock, Manfred, Dr., D-51375 Leverkusen (DE); Yuva, Nusret, D-42799 Leichlingen (DE)

(56) Entgegenhaltungen:
- EP-A- 0 232 778
- EP-A- 0 303 907
- FR-A- 2 242 414
- US-A- 3 437 624

## Beschreibung

2-Komponenten-Polyurethanlacke (2K-PUR-Lacke) werden aufgrund der nur begrenzten Verarbeitungszeit der Lackemulsionen erst kurz vor der Applikation vermischt.

Während solche Zweikomponenten-Systeme in der Vergangenheit in organischen Lösungsmitteln gelöst eingesetzt wurden, sind in neuerer Zeit eine Vielzahl von wasserdispergierbaren Zweikomponenten-Systemen entwickelt worden. Die wasserdispergierbaren Zweikomponenten-Systeme bestehen regelmäßig aus einer Hydroxylgruppen aufweisenden Harzkomponente (Binder, Polyol) und einer Polyisocyanatkomponente (Härter, Vernetzer). Solche, auch im Rahmen der vorliegenden Erfindung einsetzbaren Systeme, sind z.B. in den EP-A 358 979, 496 210, 469 389, 520 266, 540 985, 548 669, 562 282, 562 436 und 583 728 offenbart. Nachteilig an diesen Zweikomponenten-Polyurethanlack-Systemen ist, daß diese neben Wasser noch einen relativ hohen Anteil an organischem Lösungsmittel von 15 bis 25 % benötigen. Ferner wird die von den Zweikomponenten-Systemen auf Basis rein organischer Lösungsmittel bekannte Lackqualität häufig nicht erreicht.

Bekannt ist, zur Erzielung hoch qualitativer Lackoberflächen Lackdispersionen mit möglichst kleiner Teilchengröße einzusetzen. Während bei den hier betroffenen Zweikomponenten-Polyurethan-Lacken der Binder regelmäßig mit hinreichend kleiner Teilchengröße von unter 200 nm dispergierbar ist, bereitet die Dispergierung der an sich hydrophoben Isocyanatkomponente erhebliche Schwierigkeiten. Diese Schwierigkeiten werden auch durch Modifizierung der Isocyanatkomponente in Richtung Hydrophilie nur graduell verkleinert. Der Grund ist darin zu sehen, daß die Isocyanatkomponente bereits während der Emulgierung auf der Oberfläche bereits gebildeter Emulsionsteilchen stabilisiert wird, so daß die oberflächliche Stabilisierungsschicht einer weiteren Zerteilung entgegen steht. Wäßrige Polyurethan-Lackemulsionen weisen daher regelmäßig eine bimodale Teilchengrößenverteilung auf mit einem ersten Verteilungsmaximum mit einer Teilchengröße von unter 100 nm (Binderkomponente) und einem zweiten Verteilungsmaximum mit einer Teilchengröße von oberhalb 10 000 nm (Isocyanatkomponente), wobei noch erhebliche Anteile mit Teilchengrößen von oberhalb 20 000 nm vorhanden sind.

Es wurden auch bereits (durch chemische Modifizierung) hydrophile Polyisocyanate und hydrophile Polyole entwickelt, die jedoch ausgehärtete Lackfilme mit unzureichender Beständigkeit gegenüber Feuchtigkeit ergeben. Lackfilme mit guter Beständigkeit gegen Feuchtigkeit werden nur durch Einsatz hydrophober oder höchstens schwach hydrophiler Isocyanatkomponenten erhalten.

Aufgrund der Vorstellung, daß die Dispergierbarkeit der Isocyanatkomponente durch die Belegungskinetik der Isocyanattröpfchen mit stabilisierendem Polyol begrenzt wird, wurde nach Möglichkeiten gesucht, eine möglichst feinteilige Dispergierung innerhalb so kurzer Zeiträume zu erzielen, innerhalb derer eine merkliche Oberflächenstabilisierung noch nicht stattfindet. Insbesondere sollte während der Dispergierung auch eine die Reaktion beschleunigende Erwärmung vermieden werden.

Es wurde nun gefunden, daß dies gelingt, wenn nach Vorvermischung von Binder, Isocyanatkomponente, Wasser, gegebenenfalls Lösungsmittelanteilen, Emulgierhilfsmitteln, sowie gegebenenfalls weiteren an sich bekannten Lackhilfsmitteln, die erhaltene Voremulsion, an die keine besonderen Anforderungen zu stellen sind, unter hohem Druck durch eine Düse mit geringer Abmessung in mindestens einer Dimension gedrückt wird.

Als Düsen kommen Spaltdüsen, Ringschlitzdüsen oder Lochdüsen in Frage. Die geringe Abmessung (Spaltbreite, Ringschlitzbreite, Lochdurchmesser) kann ca. 0,2 bis 1 mm betragen. Die Abmessungen der Düse in Strömungsrichtung kann das 1- bis 3-fache, vorzugsweise 1,5- bis 2-fache, der Abmessung geringer Dimensionen betragen. Apparate dieser Art sind als Strahldispergatoren bzw. Hochdruck-Homogenisatoren bekannt. Besonders bevorzugt wird ein Strahldispergator gemäß EP-A-101 007 eingesetzt, da bereits bei relativ geringen Drücken sehr feinteilige Dispersionen entstehen.

Der anzuwendende Druck kann typischerweise 1 bis 30 MPa (10 bis 300 Atmosphären), im Falle des Strahldispergators vorzugsweise 1 bis 8 MPa, besonders bevorzugt 2 bis 6 MPa betragen.

Gegebenenfalls kann es zweckmäßig sein, Strahldispergatoren einzusetzen, in denen mehrere hintereinander geschaltete Düsen vorgesehen sind, so daß die Emulsion innerhalb kurzer Zeit mehrfach durch eine Düse gedrückt wird. Bei solchen Strahldispergatoren mit mehreren Düsendurchgängen ist ein entsprechend der Anzahl der Düsen erhöhter Druck anzuwenden. Im allgemeinen führt allerdings ein mehr als 3-facher Düsendurchgang nicht mehr zu einer wesentlichen Verbesserung der Emulsion.

Mittels der erfindungsgemäßen Emulgierung gelingt es, über mehrere Stunden stabile Polyurethan-Lackemulsionen herzustellen, die nach Applikation und Aushärtung eine erheblich verbesserte Oberflächenqualität zeigen.

Ferner ist es möglich, den Gehalt an Lösungsmittel und/oder Hydrophilierungsmittel in der Dispersion erheblich zu reduzieren. Insbesondere können erfindungsgemäß Dispersionen mit einem Lösungsmittelgehalt von unter 15 % ohne weiteres hergestellt werden. In Abhängigkeit von dem bei der Dispergierung angewandten Druck, der Anzahl der Düsendurchgänge und dem eingesetzten Zweikomponenten-System ist es ferner möglich, auch völlig Lösungsmittel- und Hydrophilierungsmittel-freie Emulsionen herzustellen.

Die mit dem erfindungsgemäßen Verfahren erzielbaren hohen Oberflächenqualitäten der Lackierungen, können unmittelbar der Teilchengrößenverteilung in den erfindungsgemäßen Emulsionen zugeordnet werden.

Gegenstand der vorliegenden Erfindung sind auch bimodale wäßrige Lackemulsionen auf Basis Isocyanat-reaktive Wasserstoffatome aufweisender Harze und Polyisocyanaten, die eine Teilchengrößenverteilung mit einem ersten Verteilungsmaximum bei einer Teilchengröße von 40 bis 200 nm und einem zweiten Verteilungsmaximum bei einer Teilchengröße von 200 bis 2 000 nm aufweisen. Bevorzugt liegt das zweite Verteilungsmaximum bei einer Teilchengröße von 300 bis 1 000 nm. Die Teilchengrößen der Verteilungsmaxima unterscheiden sich mindestens um einen Faktor 2.

Insbesondere weisen 99 Gew.-% der Teilchen der erfindungsgemäßen Emulsion eine Teilchengröße von unter 5 000 nm auf.

Erfindungsgemäß können alle auch bisher schon für Zweikomponenten-Polyurethan-Lacke eingesetzten Bindemittel und Vernetzerkomponenten eingesetzt werden.

Geeignete Bindemittelharze sind z.B. Polyurethanharze, die aufgrund der in den Urethangruppen vorliegenden aktiven Wasserstoffatome mit Polyisocyanaten vernetzbar sind, Hydroxylgruppen aufweisende Polyacrylate, inbesondere solche des Molekulargewichtsbereiches 1 000 bis 10 000, oder Hydroxylgruppen aufweisende, gegebenenfalls Urethan-modifizierte Polyesterharze, wie sie aus der Polyester- und Alkydharzchemie bekannt sind; prinzipiell jedoch alle Bindemittel, die NCO-reaktive Gruppen aufweisen. Vorzugsweise werden hydrophile Polyole eingesetzt.

Als Polyisocyanatkomponente sind beliebige organische Polyisocyanate mit aliphatisch, cycloaliphatisch, araliphatisch und/oder aromatisch gebundenen, freien Isocyanatgruppen, die bei Raumtemperatur flüssig sind, geeignet. Die Polyisocyanatkomponente sollte im allgemeinen eine Viskosität von 20 bis 2 000 mPa.s, vorzugsweise von unterhalb 1 000 mPa.s, insbesondere unterhalb 500 mPa.s, aufweisen. Jedoch können auch höherviskose oder feste Polyisocyanate eingesetzt werden, wenn die Viskosität der Polyisocyanatkomponente durch einen entsprechenden Lösungsmittelgehalt herabgesetzt ist. Besonders bevorzugt werden als Polyisocyanate solche mit ausschließlich aliphatisch und/oder cycloaliphatisch gebundenen Isocyanatgruppen mit einer zwischen 2,2 und 5,0 liegenden mittleren NCO-Funktionalität und einer Viskosität von 50 bis 500 mPa.s bei 23°C eingesetzt. Bei entsprechend niedriger Viskosität gelingt erfindungsgemäß eine Dispergierung mit hinreichend kleiner Teilchengröße völlig ohne Lösungsmittelzusatz.

Ferner können die in der Lackchemie bekannten üblichen Zusatz- und Modifizierungsmittel eingesetzt werden.

Der Gegenstand der vorliegenden Erfindung ist nicht an den Einsatz speziell für wasserdispergierbare Lacksysteme entwickelte Komponentensysteme, wie beispielhaft in den eingangs aufgezählten europäischen Offenlegungsschriften beschrieben, gebunden. Vielmehr ist es erfindungsgemäß möglich, eine Vielzahl der bisher nicht wasserdispergierbaren Zweikomponenten-Systeme einzusetzen. Jedoch wird im allgemeinen bei erfindungsgemäßem Einsatz von speziell für die Dispergierung in Wasser entwickelten Zweikomponenten-Systemen der Dispergieraufwand im Rahmen der vorliegenden Erfindung (d.h. der anzuwendende Druck) besonders günstig sein.

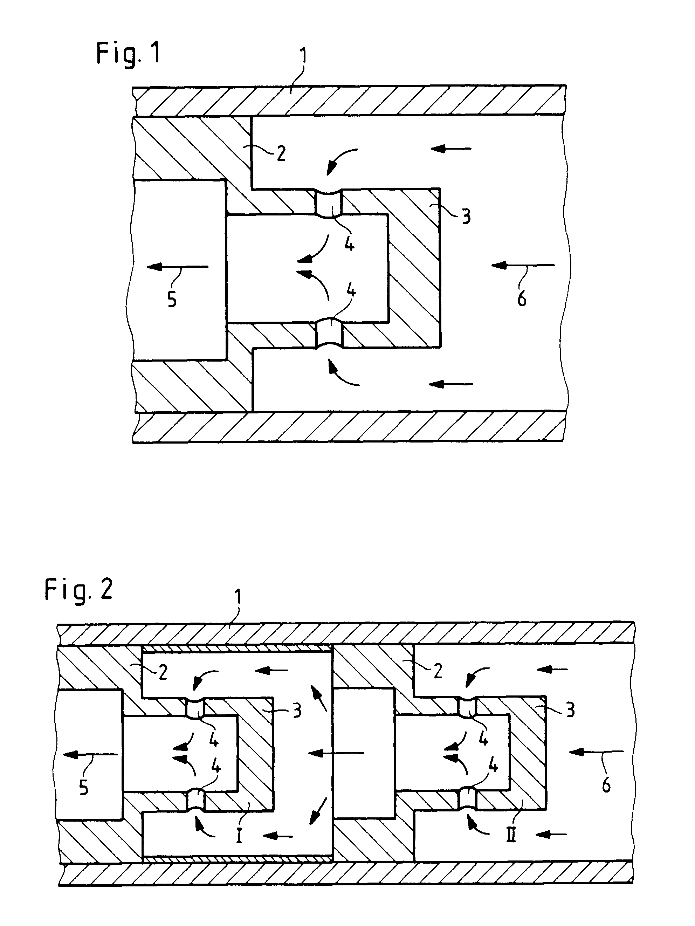

Weitere Einzelheiten und bevorzugte Ausführungsformen der Erfindung ergeben sich ohne Beschränkung der Allgemeinheit aus den beigefügten Fig. 1 bis 6.

Gemäß Fig. 1 besteht die erfindungsgemäß bevorzugte Emulgiervorrichtung aus einem Rohr 1 mit einem Einsatz 2, der einen in Strömungsrichtung verschlossenen Ansatz 3 aufweist. Der Ansatz 3 weist über den Umfang des Rohres 3 verteilte radiale Bohrungen 4 auf, die als Emulgierdüsen fungieren. Die Voremulsion wird unter hohem Druck in Richtung des Pfeiles 6 eingeführt und verläßt die Emulgiervorrichtung als feinteilige Emulsion in Richtung des Pfeiles 5. Fig. 2 zeigt eine Fig. 1 entsprechende Vorrichtung, wobei jedoch zwei hintereinander geschaltete Dispergiereinsätze I und II vorgesehen sind. Gegebenenfalls kann es zweckmäßig sein, daß der in Strömungsrichtung zweite Emulgiereinsatz Bohrungen 4 mit kleinerem Durchmesser aufweist, als der erste Emulgiereinsatz.

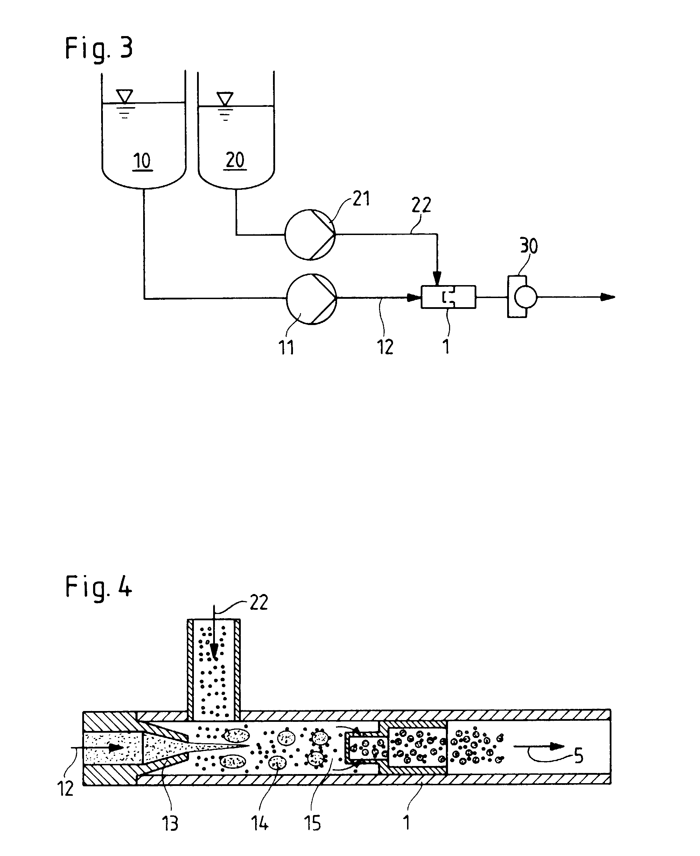

Fig. 3 erläutert das erfindungsgemäße Verfahren für den kontinuierlichen Betrieb. Aus dem Behälter 20 wird mittels Pumpe 21 über Leitung 22 eine Polyol/Wasser-Dispersion dem Strahldispergator 1 zugeführt. Ferner wird aus dem Behälter 10 mittels Pumpe 11 über Leitung 12 die Isocyanatkomponente zugeführt. Nach der Dispergierung im Strahldispergator 1 gelangt die Lackdispersion in das Lackauftragsgerät 30, z.B. eine Sprühpistole. Pumpen 11 und 21 fördern kalibriert gegen den Dispergator-Vordruck, so daß Polyoldispersion und Isocyanatkomponente im konstanten Verhältnis in den Strahldispergator 1 gelangen.

Fig. 4 zeigt eine vergrößerte Darstellung des Strahldispergators aus Fig. 3. Die Polyoldispersion wird entlang Pfeil 22 in den Voremulgierraum 15 eingeführt, wobei die Polyoltröpfchen als kleine, offene Kreise dargestellt sind. Die Isocyanatkomponente wird in Richtung des Pfeils 12 durch die Vordispergierdüse 13 in den Vordispergierraum 15 eingeführt. Mit 14 sind große Tröpfchen der Isocyanatkomponente bezeichnet. Nach Durchtritt durch den Strahldispergator verläßt die bimodale wäßrige Emulsion den Strahldispergator in Richtung des Pfeiles 5.

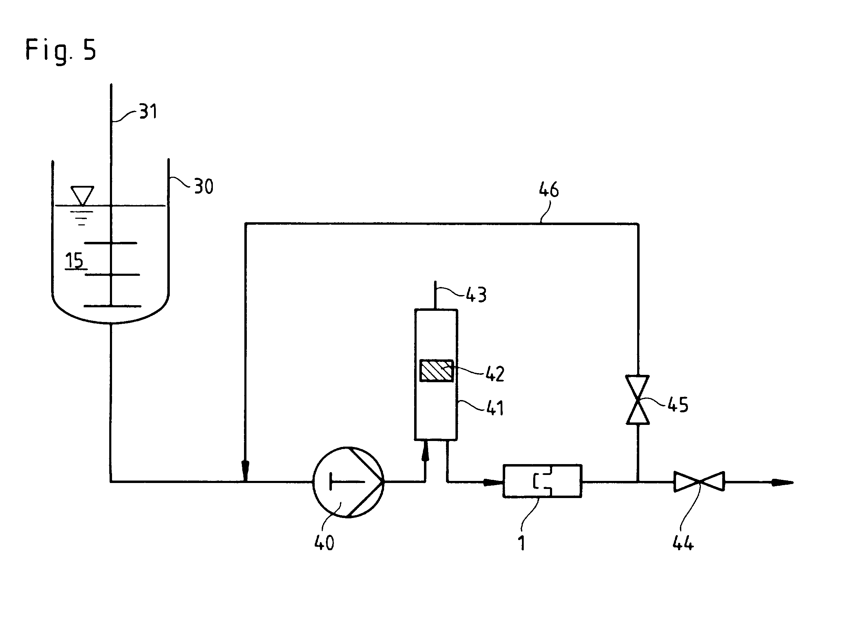

Fig. 5 erläutert die Durchführung des erfindungsgemäßen Verfahrens bei intermetierendem Lackierbetrieb. Die Vordispersion 15 wird in einem Vorratsbehälter 30 mit Rührer 31erzeugt. Die Voremulsion wird über Pumpe 40 dem Strahldispergator unter Druck zugeführt und gelangt über das Ventil 44 zu der nicht gezeichneten Applikationsvorrichtung z. B. eine Sprühpistole. Bei Unterbrechung der Lackierung durch Schließen des Ventils 44 wird das Ventil 45 geöffnet und die Lackemulsion über die Rückführleitung 46 zurückgeführt, so daß auf der Austrittsseite des Strahldispergators 1 kein Druckaufbau erfolgt. In der in Fig. 5 dargestellten Ausführungsform ist als Pumpe 40 eine einfache Membrankolbendosierpumpe vorgesehen, der ein Kolbenspeicher 41nachgeschaltet ist, durch den eine kontinuierliche pulsationsfreie Zufuhr der Voremulsion zum Strahldispergator 1 sichergestellt wird. Der Kolbenspeicher besteht aus einem Gehäuse und einem darin befindlichen Kolben 42, der auf seiner Rückseite 43 mit Gas unter konstantem Druck beaufschlagt wird. Der Kolbenspeicher 41 gleicht also die periodischen Förderleistungen der Membrankolbenpumpe aus. Vorzugsweise ist das Ventil 45 als Druckhalteventil ausgebildet, das sich bei sich verändernder Entnahme über Ventil 44 öffnet bzw. schließt, so daß der Strahldispergator 1 unter konstanten Bedingungen betrieben werden kann.

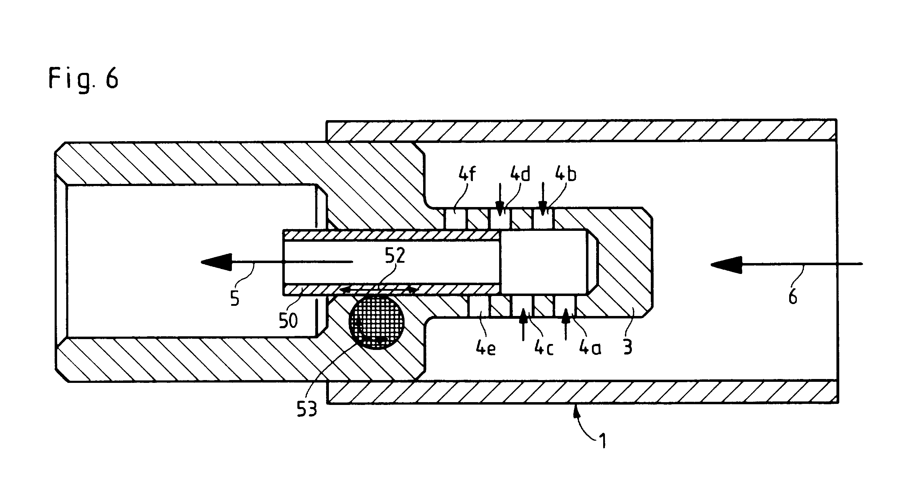

Fig. 6 zeigt eine weitere spezielle Ausführungsform des erfindungsgemäß einsetzbaren Strahldispergators. Der Strahldispergator gemäß Fig. 6 weist mehrere Bohrungen 4 a bis 4 f auf, die entlang der Achse des Einsatzes 3 versetzt sind. Ferner auf der Niederdruckseite 5 des Strahldispergators ein mittels Antrieb 53 in axialer Richtung, d.h. in Richtung des Pfeiles 52, verschiebbares Einsatzrohr 50, mit dessen Hilfe der Durchsatz der Emulsion variiert werden kann, indem sukzessive die versetzten Öffnungen 4 a bis 4 f freigegeben bzw. verdeckt werden können. Auf diese Weise ist es möglich, die Lackierleistung variable zu gestalten. Z.B. ist es möglich, den Dispergator gemäß Fig. 6 in eine Sprühpistole einzubauen und über ein entsprechendes Getriebe das Einsatzrohr 6 direkt mit dem Handhebel der Sprühpistole zu verschieben. Entsprechend kann der Dispergator gemäß Fig. 6 in den Kopf des Lackierautomaten einer Lackierstraße eingesetzt werden, wobei die Dosierung der Lackemulsion elektronisch über den Antrieb 53 gesteuert wird.

### Beispiele

### I) Polyolsysteme

Polyol 1: Polyol gemäß Beispiel 3 der EP-A 578 940
Polyol 2: Polyol gemäß Beispiel 2 der EP-A 496 210

### II) Polyolkomponenten

Polyolkomponente wird hergestellt durch Vermischen des Polyoltyps mit Wasser.

| Polyolkomponente | 1 | 2 | 3 |
|---|---|---|---|
| Polyoltyp | 1 | 1 | 2 |
| Menge Polyoltyp (g) | 888 | 801 | 1908 |
| Menge Wasser (g) | 900 | 1050 | 342 |
| Menge Polyolkomponente (g) | 1788 | 1851 | 2250 |

### III) Polyisocyanatsysteme

- Polyisocyanat 1:: Polyisocyanat 3 gemäß Beispielen der EP-A 358 979, aber mit Viskosität des 100%igen Produktes von ca 1200 mPa·s/23°C und einem durchschnittlichen NCO-Gehalt von 22,5 %.
- Polyisocyanat 2:: Gemäß Beispiel 3 der EP-A 540 985.
- Polyisocyanat 3:: Polyisocyanat mit Isocyanurat-Struktur auf Basis von Isophorondiisocyanat, erhältlich unter der Bezeichnung ®Desmodur Z 4370 von der Bayer AG, Leverkusen.

### IV) Polyisocyanatkomponenten

Der Polyisocyanattyp wird mit ®Baysilone OL 44, erhältlich bei der Bayer AG, Leverkusen, und gegebenenfalls mit Butyldiglykolacetat vermischt.

| Polyisocyanatkomponente | 1 | 2 | 3 |
|---|---|---|---|
| Polyisocyanattyp | 1 | 2 | 3 |
| Menge Polyisocyanattyp (g) | 900 | 936 | 739 |
| Menge ®Baysilone OL 44 (g) | 12 | 12 | 11 |
| Menge Butyldiglykolacetat (g) | 300 | 201 | - |
| Menge Polyisocyanatkomponente (g) | 1212 | 1149 | 750 |

### V) Herstellung der Voremulsion

Die Polyolkomponente wird vorgelegt. Die Polyisocyanatkomponente wird innerhalb von 3 Minuten unter intensivem Rühren per Hand zugefügt. Die Voremulsion kann in der dann vorliegenden Form unmittelbar für die erfindungsgemäße Feindispergierung eingesetzt werden.

### VI) Herstellung der Emulsionen

### A erfindungsgemäß

Die Voremulsionen werden unmittelbar nach dem Vermischen der Komponenten durch ein Rohr mit einem Innendurchmesser von 10 mm, das einen Feinemulgiereinsatz gemäß Fig. 1 aufweist, wobei das innere Rohr 3 zwei radiale Bohrungen von 0,5 mm Durchmesser bei einer Rohrwandstärke von 1,3 mm aufweist, bei einem Druck von 50 bar gedrückt.

### B nach dem Stand der Technik

Die Voremulsionen werden kontinuierlich einer Rotormischkammer mit einem freien Volumen der Mischkammer von 20 cm³ zugeführt und hinter der Mischkammer kontinuierlich in ein Lackvorratsgefäß abgeführt. Die Vermischung erfolgt durch einen Rotormischer mit Durchmesser von ca. 20 mm bei einer Umdrehungszahl von 6000 U/Min.

### C erfindungsgemäß

Es wurde wie unter A verfahren, jedoch betrug der Gesamtdruck 20 bar.

### D erfindungsgemäß

Es wurde wie unter A verfahren, jedoch wurde die Emulgiervorrichtung gemäß Fig. 2, jedoch mit 3 gleichartigen Emulgiereinsätzen wie unter A, eingesetzt. Der Gesamtdruck betrug 100 bar.

### VII) Bewertung der Emulsionen

An den erhaltenen Emulsionen wurden folgende Untersuchungen durchgeführt:
- Ermittlung der Teilchengrößenverteilung durch Messung der Fraunhofer-Beugung (Wellenlänge des Lichtes: 632 nm)
- Ermittlung der Teilchengrößenverteilungsmaxima mittels Ultrazentrifuge, wie beschrieben bei H.G. Müller, Colloid Polym. Sci. 267 (1989) s. 1113-1116.

Die Ergebnisse sind in der folgenden Tabelle dargestellt:

| Bewertung der Emulsionen, hergestellt nach verschiedenen Emulgierverfahren | | | | | | | |
|---|---|---|---|---|---|---|---|
| Emulsionsbeispiel | | Teilchengröße (µm) | | | | Teilchengröße | |
| Voremulsion Bsp.Nr. | Emulgierverfahren | < 10% | <50% | <90% | <99% | Maxima (µm) | |
| 1 | A | 0,22 | 0,47 | 1,28 | 3,5 | 0,06 | 0,42 |
| 1 | B | 0,71 | 7,6 | 16,2 | 25 | 0,06 | > 10 |
| 2 | A | 0,24 | 0,47 | 1 | 3 | 0,06 | 0,3 |
| 2 | B | 0,66 | 4,2 | 11,4 | 25 | 0,06 | > 10 |
| 3 | A | 0,33 | 0,83 | 2,4 | 5,8 | 0,04 | 0,7 |
| 3 | B | 0,87 | 7,41 | 14 | 16,3 | 0,04 | > 10 |
| 4 | C | 0,36 | 0,95 | 2,3 | 4,5 | 0,06 | 0,9 |
| 4 | D | 0,24 | 0,48 | 0,97 | 1,3 | 0,06 | 0,3 |

### VIII) Herstellung von Lackierungen und Bewertungen

Die Emulsionen wurden mittels einer für die Spritzlackierung üblichen Fließbecher-Airmix-Spritzpistole auf Glasplatten in waagerechter und senkrechter Stellung appliziert. Nach Ablüftzeit von 10 Minuten bei Raumtemperatur wird der Lack 10 Minuten bei 80°C und anschließend bei 30 Minuten bei 130°C in gleicher Positionierung (waagerecht bzw. senkrecht) getrocknet.

Es wurden visuelle Bewertungen getrennt nach Mikrostruktur und Orangenstruktur durchgeführt (+ = gut; - = unzureichend). DOI (distinctness of image) - Meßwerte wurden in einer speziellen Abmusterungskabine anhand der Einstufung des Spiegelbildes einer Musterkarte ermittelt. Die DOI-Musterkarte zeigt eine Reihe von nicht ganz geschlossenen Kreisen unterschiedlichen Durchmessers, den die Werte von 10 (größter Kreis) bei 100 (kleinster Kreis) in Schritten zu je 10-Einheiten zugeordnet sind. Der DOI-Wert bezeichnet den Wert desjenigen Kreises, an dessen Spiegelbild gerade noch erkennbar ist, daß dieser nicht geschlossen ist.

Die Ergebnisse sind in der nachfolgenden Tabelle dargestellt:

| Lackierung nach Beispiel | | Visuelle Bewertung | | | | DOI | |
|---|---|---|---|---|---|---|---|
| Voremulsion Bsp.Nr. | Emulgierverfahren | Orangenstruktur | | Mikrostruktur | | | |
| | | waagerecht | senkrecht | waagerecht | senkrecht | waagerecht | senkrecht |
| 1 | A | + | + | + | + | 90 | 90 |
| 1 | B | - | - | - | - | 70 | 60 |
| 2 | A | + | + | + | + | 90 | 80 |
| 2 | B | - | - | - | - | 80 | 60 |
| 3 | A | + | + | + | + | 80 | 70 |
| 3 | B | - | - | - | - | 50 | 40 |
| 4 | C | + | + | + | + | 90 | 80 |
| 4 | D | + | + | + | + | 90 | 80 |

## Patentansprüche

1. Verfahren zur Herstellung wäßriger Lackemulsionen auf Basis Isocyanat-reaktive Wasserstoffatome aufweisender Bindemittelharze und Polyisocyanate durch Vermischen der Komponenten mit Wasser, dadurch gekennzeichnet, daß die Mischung unter einem Druck von 1 bis 30 MPa durch eine Düse mit geringer Abmessung in mindestens einer Dimension gedrückt wird.

2. Bimodale wäßrige Lackemulsion auf Basis Hydroxylgruppen-haltiges Harzbindemittel und Polyisocyanate, gekennzeichnet durch eine Teilchengrößeverteilung mit einem ersten Verteilungsmaximum bei einer Teilchengröße von 40 bis 200 nm und einem zweiten Verteilungsmaximum bei einer Teilchengröße von 200 bis 2000 nm.

3. Lackemulsionen nach Anspruch 2, wobei 99 Gew.-% der emulgierten Teilchen eine Teilchengröße von unter 5 000 nm aufweisen.

## Claims

1. Process for the preparation of aqueous coating emulsions based on resin binders containing hydrogen atoms reactive towards isocyanate and on polyisocyanates, by mixing the components with water, characterised in that the mixture is pressed at a pressure of from 1 to 30 MPa through a nozzle of small size in at least one dimension.

2. Bimodal aqueous coating emulsion, based on a resin binder containing hydroxyl groups and on polyisocyanates, characterised by a particle size distribution having a first distribution maximum at a particle size of from 40 to 200 nm, and a second distribution maximum at a particle size of from 200 to 2,000 nm.

3. Coating emulsions according to claim 2, wherein 99 wt.% of the emulsified particles have a particle size of less than 5,000 nm.

## Revendications

1. Procédé de préparation d'émulsions aqueuses de vernis à base de liants résineux portant des atomes d'hydrogène réactifs avec les isocyanates et de polyisocyanates par mélange des composants avec de l'eau, caractérisé en ce que l'on refoule le mélange sous une pression de 1 à 30 MPa au travers d'une tuyère à au moins une petite dimension.

2. Emulsion aqueuse bimodale de vernis à base de liants résineux à groupes hydroxy et de polyisocyanates, caractérisée par une répartition des dimensions de particules comportant un premier maximum de la répartition à une dimension de particule de 40 à 200 nm et un deuxième maximum de la répartition à une dimension de particule de 200 à 2 000 nm.

3. Emulsions de vernis selon la revendication 2, dans lesquelles 99 % en poids des particules émulsionnées ont une dimension inférieure à 5 000 nm.
